# EUROPEAN PATENT SPECIFICATION

(11) **EP 4 478 185 B1**
(45) Date of publication and mention of the grant of the patent: **18.03.2026**
(21) Application number: 23895846.6
(22) Date of filing: 10.05.2023
(51) Int. Cl.: G06F 9/4401

(54) **FIRMWARE INTERACTION METHOD AND APPARATUS, AND SERVER AND STORAGE MEDIUM**
FIRMWARE-INTERAKTIONSVERFAHREN UND -VORRICHTUNG SOWIE SERVER UND SPEICHERMEDIUM
PROCÉDÉ ET APPAREIL D'INTERACTION DE MICROLOGICIEL, ET SERVEUR ET SUPPORT DE STOCKAGE

(30) Priority: 28.11.2022 CN 202211498384
(43) Date of publication of application: 18.12.2024
(73) Proprietor: Suzhou Metabrain Intelligent Technology Co., Ltd., Suzhou, Jiangsu 215000 (CN)
(72) Inventor: NING, Zhaonan, Suzhou, Jiangsu 215000 (CN); WANG, Bing, Suzhou, Jiangsu 215000 (CN); ZHANG, Binghui, Suzhou, Jiangsu 215000 (CN); TIAN, Muqing, Suzhou, Jiangsu 215000 (CN)
(74) Representative: Viering, Jentschura & Partner mbB Patent- und Rechtsanwälte
(86) International application number: PCT/CN2023/093163
(87) International publication number: WO 2024/113680

(56) References cited:
- CN-A- 107 291 653
- CN-A- 111 857 840
- CN-A- 113 254 380
- CN-A- 113 254 380
- CN-A- 114 253 749
- CN-A- 115 543 466

## Description

### TECHNICAL FIELD

The disclosure relates to the field of hardware technology, and more particularly to a firmware interaction method and apparatus, a server and a storage medium.

### BACKGROUND

The server system contains multi-party firmware such as a basic input output system (BIOS), a baseboard management controller (BMC), a complex programmable logic device (CPLD). In order to meet the market demand and customer demand, more and more functions have been incorporated into the server system. Some functions need the support of multi-party firmware. For example, the server system supports a complex peripheral configuration, which needs cooperation of BIOS and CPLD, or cooperation of BIOS and BMC.

However, the inventors have realized that no matter for the cooperation of BIOS and CPLD or the cooperation of BIOS and BMC, the General Purpose Input Output (GPIO) or KCS channel is generally used for transmission at present. Since GPIO only has high or low levels, with the increase of complexity of configuration information, the quantity of GPIO required is more and more, resulting in a serious waste of the quantity of GPIO in the processor. Moreover, there is a relatively high delay in reading GPIO or KCS channel, which seriously increases the start-up time of a power-on self-test stage (POST stage) of the server. Related technologies are known from a patent publication document CN113254380A and CN107291653A.

### SUMMARY

The invention is defined by the independent claims.

### BRIEF DESCRIPTION OF THE DRAWINGS

FIG. 1 is a schematic flow chart of a firmware interaction method provided by one or more embodiments;
FIG. 2 is a schematic flow chart illustrating an initialization step of an initial memory mapping IO provided by one or more embodiments;
FIG. 3 is a schematic flow chart illustrating a data region filling step provided by one or more embodiments;
FIG. 4 is a schematic flow chart of a firmware interaction method provided by another embodiment;
FIG. 5 is a schematic flow chart of a firmware interaction method provided by one or more embodiments;
FIG. 6 is a schematic flow chart of a firmware interaction method provided by one or more embodiments;
FIG. 7 is a schematic flow chart of a firmware interaction method provided by one or more embodiments;
FIG. 8 is a schematic flow chart of a firmware interaction method provided by one or more embodiments;
FIG. 9 is a block diagram of a firmware interaction apparatus provided by one or more embodiments; and
FIG. 10 is a diagram illustrating an internal structure of a computer device provided by one or more embodiments.

### DETAILED DESCRIPTION OF THE EMBODIMENTS

To make objects, solutions and advantages of the disclosure clearer, the application will be described in detail with reference to the accompanying drawings and embodiments. It should be understood that the specific embodiments described herein are merely used for explanation of the disclosure rather than limiting the application.

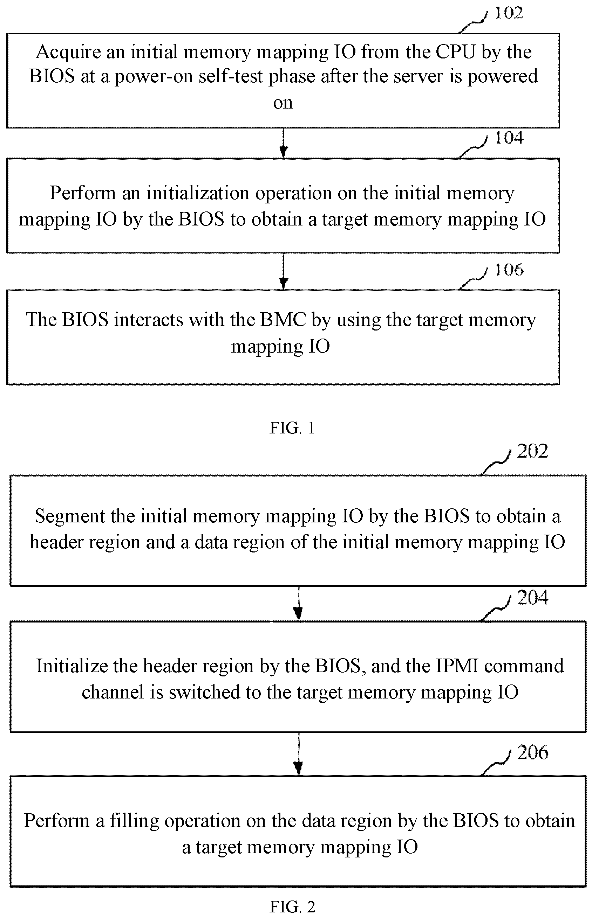

In an embodiment, as shown in FIG. 1, a firmware interaction method is provided. As an example for explanation, the method is applied to a server that includes a plurality of firmware, and each firmware is a central processing unit (CPU), a Basic Input Output System (BIOS) and a baseboard management controller (BMC). The method includes the following steps.

At step 102, an initial memory mapping IO is acquired from the CPU by the BIOS at a power-on self-test stage after the server is powered on.

The server includes a plurality of firmware, and each firmware may be a Central Processing Unit (CPU), a Basic Input Output System (BIOS) and a Baseboard Management Controller (BMC). A Peripheral Component Interface Express (PCIE) device is built in the BMC.

After being powered on, the server performs a power-on self-test (that is, a POST stage). At the POST stage, the BIOS acquires an initial memory mapping IO from the CPU. Herein, the initial memory mapping IO does not record anything, and needs to be planned and laid out by the BIOS.

The Basic Input Output System (BIOS) is stored with basic input/output program, power-on self-test program and system self-starting program that are most important to the computer, so as to provide the most underlying direct hardware configuring and control for the computer.

Herein, the BMC and the memory mapping IO (MMIO) are a part of the PCI specification. IO devices are placed in the memory space rather than the I/O space. From the perspective of the central processing unit (CPU), the system accesses the devices similarly to accessing the memory after the memory mapping IO. Accordingly, the BIOS device may use assembly instructions like reading and writing memory to access a frame buffer on the Accelerated Graphical Port (AGP)/ Peripheral Component Interconnect Express (PCI-E) graphics card, thereby simplifying the difficulty of programming and the complexity of interface.

At the POST stage, BIOS may plan and lay out the memory mapping IO according to capacity requirements of the PCIE device built in the BMC, and may obtain a blank initial memory mapping IO from the CPU first.

At step 104, a target memory mapping IO is obtained through performing an initialization operation on the initial memory mapping IO by the BIOS.

After obtaining the initial memory mapping IO, the BIOS performs an initialization operation on the initial memory mapping IO, because the initial memory mapping IO obtained by the BIOS from the CPU is blank, and the BIOS is required to perform a planning and layout (that is, an initialization operation) on the initial memory mapping IO. The BIOS, the BMC and the CPLD are required to jointly formulate the layout and use method of the initial memory mapping IO, and the initialization operation at least includes a write arbitration mechanism, data integrity detection, a data header flag, a data format, a data storage method in power failure, etc. That is to say, all these data are required to be written into the initial memory mapping IO to obtain a target memory mapping IO.

At step 106, the BIOS interacts with the BMC by using the target memory mapping IO.

After obtaining the target memory mapping IO, the BIOS uses the target memory mapping IO to interact with the BMC. Herein, the target memory mapping IO has a low latency. By using the target memory mapping IO with low latency, the interaction time between the BIOS and the BMC can be reduced, thereby reducing the time cost for configuring or maintaining the server.

In the above firmware interaction method, at the POST stage after the server is powered on, the BIOS acquires the initial memory mapping IO from the CPU, obtains the target memory mapping IO through performing the initialization operation on the initial memory mapping IO, and the BIOS uses the target memory mapping IO to interact with the BMC. Compared with the related art where the KCS channel or the GPIO mode is used in the interaction between the BIOS and the BMC, the target memory mapping IO with a low latency is used, so that the interaction time between the BIOS and the BMC can be reduced, thereby reducing the start-up time of the POST stage of the server, and further reducing the time for configuring or maintaining the server. Moreover, the GPIO of CPU can be saved, so that more GPIO is available for the development of other functions.

According to the invention, as shown in FIG. 2, the step, in which a target memory mapping IO is obtained through performing an initialization operation on the initial memory mapping IO by the BIOS, includes the following steps.

At step 202, the initial memory mapping IO is segmented by the BIOS to obtain a header region and a data region of the initial memory mapping IO.

At step 204, the header region is initialized by the BIOS, and an Intelligent Platform Management Interface (IPMI) command channel is switched to the target memory mapping IO.

At step 206, a filling operation is performed on the data region by the BIOS, and the target memory mapping IO is obtained.

After obtaining the initial memory mapping IO, the BIOS divides the initial memory mapping IO into two regions, one region being a header region, the other region being a data region; a write operation is performed on the two regions; and the target memory mapping IO is obtained after the write operation is completed. Herein, the header region is used for defining whether the BIOS uses data of the data region or the BMC uses data of the data region at the current time point, and the data region is used for recording data such as a data flag bit, a data format.

Further, the BIOS initializes the header region, and in particular, writes an arbitration mechanism into the header region, where the arbitration mechanism is used for specifying a device permission for using the data of the data region at the current time point. Furthermore, the IPMI command channel is switched to the target memory mapping IO, which may be achieved by writing the IPMI command channel to the data region. In this way, the long interaction time in the related art caused by using GPIO or KCS channel for interaction can be avoided.

Moreover, the BIOS may perform a filling operation on the data region, and may obtain the target memory mapping IO by writing data related to the BIOS, and data related to the PCIE device built in the BMC and the like into the data region.

In some embodiments, the step, in which the BIOS interacts with the BMC by using the target memory mapping IO, includes that the BIOS uses the data region of the target memory mapping IO to interact with the BMC.

After obtaining the target memory mapping IO that includes the header region and the data region, the BIOS may use the data region of the target memory mapping IO to interact with the BMC.

In some embodiments, the step, in which the header region is initialized by the BIOS, includes writing the arbitration mechanism into the header region by the BIOS.

Herein, the arbitration mechanism is used for specifying the device permission of using the data of the data region at the current time point. That is to say, a device that uses the data of the data region at the current time point is only allowed to be read or modified by the BIOS or BMC, and cannot be read or modified by both of them, which avoids abnormal reading or modification process.

In some embodiments, the arbitration mechanism allows only the BIOS or the BMC to read the target memory mapping IO at the same time point.

In some embodiments, the arbitration mechanism allows only the BIOS or the BMC to modify the target memory mapping IO at the same time point.

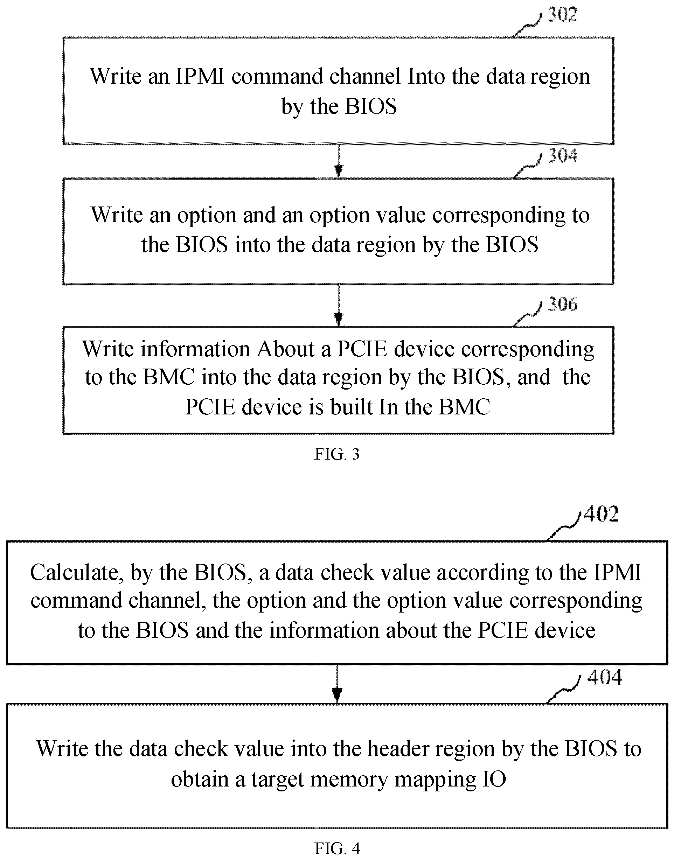

According to the invention, as shown in FIG. 3, the step, in which a filling operation is performed on the data region by the BIOS, and the target memory mapping IO is obtained, includes steps below.

At step 302, the IPMI command channel is written into the data region by the BIOS.

At step 304, an option and an option value corresponding to the BIOS are written into the data region by the BIOS.

At step 306, information about a PCIE device corresponding to the BMC is written into the data region by the BIOS, and the PCIE device is built in the BMC.

The filling operation on the data region by the BIOS writes the option and the option value corresponding to the BIOS, the device information related to the PCIE device built in the BMC and the IPMI command channel into the data region. By writing the IPMI command channel into the data region, the BIOS may send the IPMI command to the BMC via the target memory mapping IO. By writing the option and the option value corresponding to the BIOS into the data region, the option and the option value of the BIOS may be displayed on the BMC and modified. After being modified, the option and the option value of the BIOS may be saved to the data region of the target memory mapping IO by the BMC. By writing the device information about the PCIE device corresponding to the BMC into the data region, the interaction time between the BIOS and the BMC is reduced, the PCIE device built in the BMC may quickly read the device information via the target memory mapping IO.

According to the invention, as shown in FIG. 4, the above method further includes:
At step 402, the BIOS calculates a data check value according to the IPMI command channel, the option and the option value corresponding to the BIOS and the information about the PCIE device .

At step 404, the data check value is written into the header region by the BIOS, and the target memory mapping IO is obtained.

After the IPMI command channel, the option and option value corresponding to the BIOS and the information about the PCIE device are written into the data region, a data check value is calculated according to the IPMI command channel, the option and option value corresponding to the BIOS and the information about the PCIE device. Herein, the data check value is used for determining whether the data of the data region is legal, namely, whether the data of the data region is illegally tampered with. Finally, the data check value is written into the header region to obtain the target memory mapping IO. Herein, by writing the arbitration mechanism and the data check value into the header region of the target memory mapping IO, the data in the header region is prevented from being modified. Moreover, the interaction between the BIOS and the BMC is achieved by using the data region of the target memory mapping IO without reading or modifying the header region of the target memory mapping IO.

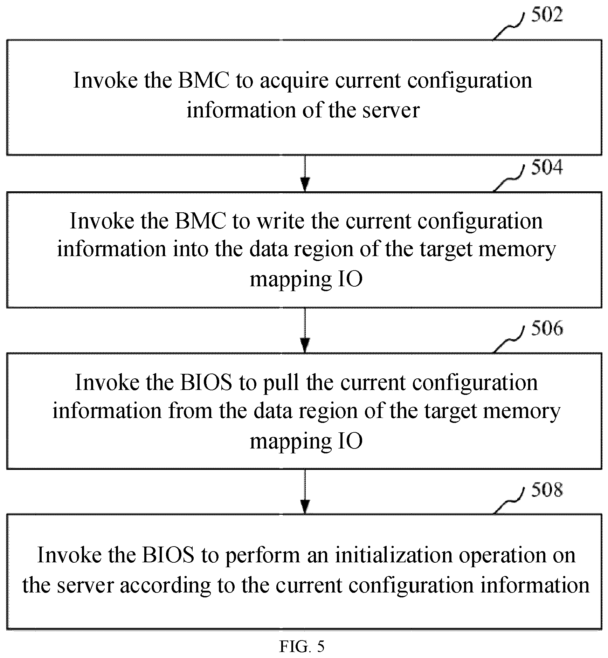

In some embodiments, as shown in FIG. 5, after the BIOS interacts with the BMC by using the target memory mapping IO, the method further includes steps below.

At step 502, the BMC is invoked to acquire current configuration information of the server.

At step 504, the BMC is invoked to write the current configuration information into the data region of the target memory mapping IO.

At step 506, the BIOS is invoked to pull the current configuration information from the data region of the target memory mapping IO.

At step 508, the BIOS is invoked to perform an initialization operation on the server according to the current configuration information.

After the BIOS uses the target memory mapping IO to interact with the BMC, which means that the BMC may also use the target memory mapping IO to interact with the BIOS, the BMC may acquire current configuration information of the server that refers to current configuration parameter information about the server; the BMC then writes the acquired current configuration information into the data region of the target memory mapping IO to inform the BIOS; the BIOS may pull the current configuration information from the data region of the target memory mapping IO; finally, the BIOS performs an initialization operation on the server according to the pulled current configuration information.

That is to say, the relevant operation may be performed on the server by writing, by the BMC, the configuration information of the server into the data region of the target memory mapping IO and by pulling, by the BIOS, the configuration information of the server from the data region.

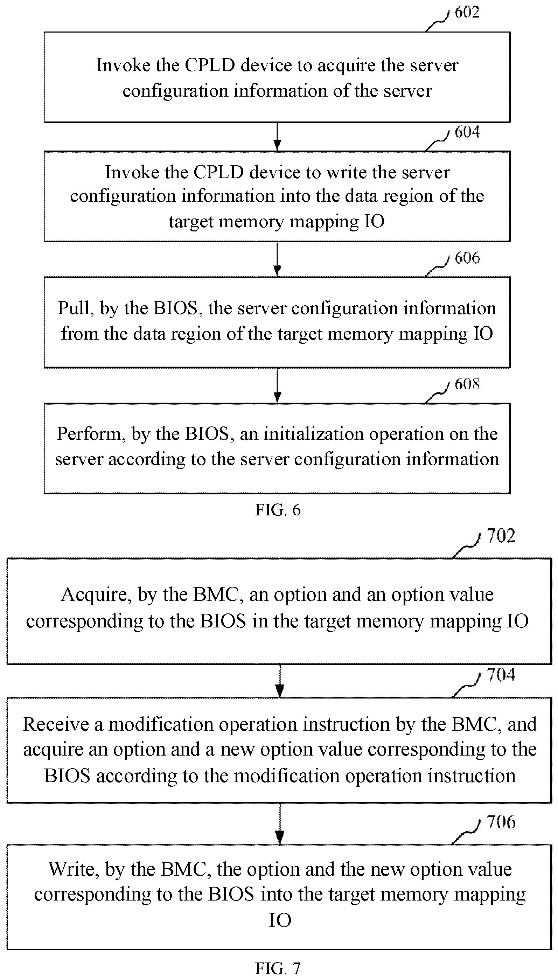

In some embodiments, as shown in FIG. 6, the server further includes a complex programmable logic device (CPLD) device, and the BIOS interacts with the CPLD device using the target memory mapping IO. The method further includes steps below.

At step 602, the CPLD device is invoked to acquire server configuration information corresponding to the server.

At step 604, the CPLD device is invoked to write the server configuration information into the data region of the target memory mapping IO.

At step 606, the server configuration information is pulled from the data region of the target memory mapping IO by the BIOS.

At step 608, an initialization operation is performed on the server according to the server configuration information by the BIOS.

The configuration information about the server may also be pulled by the CPLD device. That is to say, the firmware of the server may further include the CPLD device, and the BIOS uses the target memory mapping IO to interact with both the CPLD device and the BMC. Therefore, the CPLD device may write the pulled server configuration information into the data region of the target memory mapping IO.

The CPLD device acquires server configuration information of the server, writes the server configuration information into the data region of the target memory mapping IO; the BIOS may pull the server configuration information from the data region of the target memory mapping IO, and then perform an initialization operation on the server according to the server configuration information. That is to say, the configuration information of the server may be obtained by the BMC or obtained by the CPLD, which may be determined according to actual service requirements, actual product requirements or actual application scenarios.

In some embodiments, after the BIOS interacts with the BMC by using the target memory mapping IO, the method further includes invoking the BIOS to send an IPMI command to the BMC through the target memory mapping IO.

Since the IPMI command channel is written into the data region of the target memory mapping IO, the BIOS may send the IPMI command to the BMC through the target memory mapping IO. Compared with the related art, the IPMI command of the BIOS is sent to the BMC via the GPIO or the KCS channel, since the target memory mapping IO with a low latency is used to send the IPMI command, the interaction time between the BIOS and the BMC may be reduced, thereby reducing the time for configurating or maintaining the server. Moreover, the GPIO of the central processor CPU is saved, so that the more available GPIO may be used for other function development.

In some embodiments, as shown in FIG. 7, after the BIOS interacts with the BMC by using the target memory mapping IO, the method further includes steps below.

At step 702, the option and the option value corresponding to the BIOS in the target memory mapping IO are acquired by the BMC.

At step 704, a modification operation instruction is received by the BMC, and the option corresponding to the BIOS and a new option value are acquired according to the modification operation instruction.

At step 706, the option corresponding to the BIOS and the new option value are written into the target memory mapping IO by the BMC.

After the BIOS interacts with the BMC by using the target memory mapping IO, the BMC may acquire the option corresponding to the BIOS and the option value by reading the data region of the target memory mapping IO, and display the same via an interface. A modification operation instruction that is triggered and generated by performing a modification operation on the display interface, is received. The modification operation instruction carries a modified option and a new option value. The BMC writes the modified option and the new option value into the data region of the target memory mapping IO according to the modification operation instruction, and informs the BIOS so that the BIOS determines the modified option and the new option value by reading the data region of the target memory mapping IO.

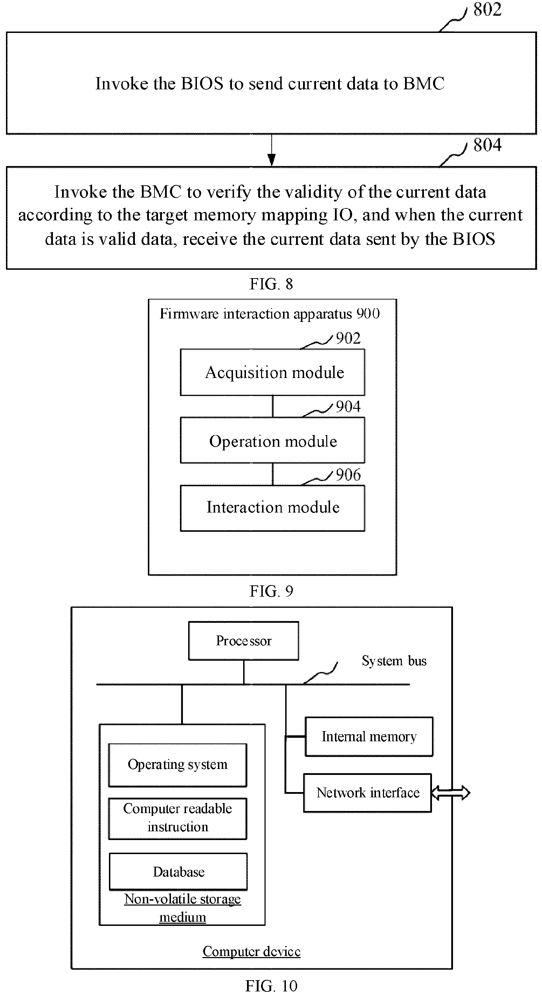

In some embodiments, as shown in FIG. 8, after the BIOS interacts with the BMC by using the target memory mapping IO, the method further includes steps below.

At step 802, the BIOS is invoked to send current data to the BMC.

At step 804, the BMC is invoked to verify the validity of the current data according to the target memory mapping IO, and the current data sent by the BIOS is received when the current data is valid data.

The current data here is the data required to be sent to the BMC by the BIOS, and may be the data in the data region of the target memory mapping IO, and may also be other data. The BIOS sends the current data to the BMC. After receiving the current data, the BMC calculates a current data check value according to the data in the data region of the target memory mapping IO and the current data, and determines the validity of the current data by comparing the current data check value with the data check value in the header region of the target memory mapping IO. When the two data check values are same, it indicates that the current data is valid data, and the BMC may receive the current data sent by the BIOS. Otherwise, when the two data check values are different, it indicates that the current data is illegal data and may be tampered with, and then BMC rejects the current data sent by the BIOS.

In a certain application scenario, the memory mapping IO of the PCIE device built in the BMC is used for the interaction between the BIOS and the BMC. At the POST stage of the server, the BIOS acquires an initial memory mapping IO according to the capacity requirement of the PCIE device built in the BMC, and at the same time, the BIOS, the BMC and the CPLD jointly formulate the layout and the use method of the initial memory mapping IO. The layout at least includes an arbitration mechanism, data integrity detection, a data header flag, a data format, a data storage method in power failure, etc. The arbitration mechanism only allows one device to read and modify data at the same time point. The data integrity includes a data check value of the current data, etc. The initial memory mapping IO is divided into two parts, one part being a header region and the other part being a data region. Firstly, the BIOS initializes the header region to switch the IPMI command channel to the memory mapping IO. Secondly, the CPLD device or the BMC device fills the detected hardware information into the data region. Finally, the BIOS grabs the information of data region to initialize the system, and the BIOS also uses the data region to interact with the BMC. The implementation steps are as follows.
1. The layout of the memory mapping IO is planned, and the layout should take into account an arbitration mechanism, data integrity detection, a data header flag, a data format, and a data storage method in power failure, etc.
2. At the POST stage, the BIOS retrieves an initial memory mapping IO from the CPU.
3. The BIOS obtains a target memory mapping IO by initializing the initial memory mapping IO, and switches the IPMI command channel to the target memory mapping IO.
4. The CPLD device fills the server configuration information of the server into the target memory mapping IO.
5. The BIOS reads the server configuration information from the target memory mapping IO, and initializes the server according to the server configuration information. Moreover, the BIOS also uses the data region of the target memory mapping IO to interact with the BMC.

It should be understood that, although the various steps in the above-described flowcharts are shown sequentially as indicated by the arrows, the steps are not necessarily performed sequentially in the order indicated by the arrows. The steps are performed in no strict order unless explicitly stated herein, and the steps may be performed in other orders. Moreover, at least some of the steps in the above-described flowcharts may include a plurality of sub-steps or stages, which are not necessarily performed at the same time, but may be performed at different times. The order in which these sub-steps or stages are performed may not necessarily be sequential, but may be performed alternately or alternately with at least some of the other steps or sub-steps or stages of other steps.

In some embodiments, as shown in FIG. 9, a firmware interaction apparatus 900 is provided. The firmware interaction apparatus is applied to a server that includes a plurality of firmware, each firmware being a CPU, a BIOS and a BMC. The firmware interaction apparatus includes an acquisition module 902, an operation module 904 and an interaction module 906.

The acquisition module 902 is configured for acquiring an initial memory mapping IO from the CPU by the BIOS at a power-on self-test (POST) stage after the server is powered on.

The operation module 904 is configured for performing an initialization operation on the initial memory mapping IO by the BIOS, and obtaining a target memory mapping IO.

The interaction module 906 is configured for using, by the BIOS, the target memory mapping IO to interact with the BMC.

According to the invention, the operation module 904 is configured for segmenting the initial memory mapping IO by the BIOS to obtain a header region and a data region of the initial memory mapping IO, initializing the header region by the BIOS, switching an IPMI command channel to the target memory mapping IO, performing a filling operation on the data region by the BIOS, and obtaining the target memory mapping IO.

In some embodiments, the interaction module 906 is configured for using, by the BIOS, the data region of the target memory mapping IO to interact with the BMC.

In some embodiments, the operation module 904 is configured for writing an arbitration mechanism into the header region by the BIOS.

In some embodiments, the arbitration mechanism only allows the BIOS or the BMC to read the target memory mapping IO at the same time point.

In some embodiments, the arbitration mechanism only allows the BIOS or the BMC to modify the target memory mapping IO at the same time point.

According to the invention, the operation module 904 is configured for writing an IPMI command channel into the data region by the BIOS, writing an option and an option value corresponding to the BIOS into the data region by the BIOS, and writing information about a PCIE device corresponding to the BMC into the data region by the BIOS, where the PCIE device is built in the BMC.

According to the invention, the firmware interaction apparatus 900 is configured for calculating, by the BIOS, a data check value according to the IPMI command channel, the option and the option value corresponding to the BIOS and the information of the PCIE device, and writing the data check value into the header region by the BIOS so as to obtain the target memory mapping IO.

In some embodiments, the firmware interaction apparatus 900 is configured for invoking the BMC to acquire current configuration information of the server, invoking the BMC to write the current configuration information into the data region of the target memory mapping IO, invoking the BIOS to pull the current configuration information from the data region of the target memory mapping IO, and invoking the BIOS to perform an initialization operation on the server according to the current configuration information.

In some embodiments, the server further includes a complex programmable logic device (CPLD) device. The firmware interaction apparatus 900 is configured for invoking the CPLD device to acquire server configuration information of the server, invoking the CPLD device to write the server configuration information into the data region of the target memory mapping IO, pulling, by the BIOS, the server configuration information from the data region of the target memory mapping IO, and performing, by the BIOS, an initialization operation on the server according to the server configuration information.

In some embodiments, the firmware interaction apparatus 900 is configured for invoking the BIOS to send an IPMI command to the BMC through the target memory mapping IO.

In some embodiments, the firmware interaction apparatus 900 is configured for acquiring, by the BMC, an option and an option value corresponding to the BIOS in the target memory mapping IO, receiving a modification operation instruction by the BMC, acquiring an option and a new option value corresponding to the BIOS according to the modification operation instruction, and writing the option and the new option value corresponding to the BIOS into the target memory mapping IO by the BMC.

In some embodiments, the firmware interaction apparatus 900 is configured for invoking the BIOS to send the current data to the BMC, invoking the BMC to verify the validity of the current data according to the target memory mapping IO, where the current data sent by the BIOS is received when the current data is valid data.

With regard to the specific definition of the firmware interaction apparatus, reference may be made to the definition of the firmware interaction method above, and the description thereof will not be repeated here. The various modules in the firmware interaction apparatus described above may be implemented in whole or in part by software, hardware, and combinations thereof. The above modules may be embedded in hardware form or independent of one or more processors in the computer device, or may be stored in software form in one or more storage in the computer device, so that one or more processors may invoke operations corresponding to the above-described modules.

In some embodiments not according to the invention, a computer device is provided. The computer device may be a server, and the internal structure thereof may be shown in FIG. 10. The computer device includes one or more processors, one or more memories, a network interface, and a database connected via a system bus. Herein, one or more processors of the computer device are used to provide computing and control capabilities. The one or more memories of the computer device include a non-volatile storage medium, an internal memory. The non-volatile storage medium stores an operating system, computer readable instructions and a database. The internal memory provides an environment for operation of the operating system and the computer-readable instructions in the non-volatile storage medium. The database of the computer device is used to store the target memory mapping IO. The network interface of the computer device is adapted to communicate with an external terminal via a network connection. The computer-readable instructions, when executed by one or more processors, implement a firmware interaction method.

It will be appreciated by those skilled in the art that the structure shown in FIG. 10 is merely a block diagram of a portion of the structure relevant to the solution of the present application and does not constitute a limitation on the computer device to which the solution of the present application applies. A specific computer device may include more or less components than those shown in the figures, or may synthesize certain components, or may have a different arrangement of components.

In some embodiments not according to the invention, a computer device is provided. The computer device includes one or more memories, one or more processors, and computer-readable instructions stored on the one or more memories and executable on the one or more processors. The computer-readable instructions, when executed by the one or more processors, implement the following steps: at the power-on self-test stage after the server is powered on, the BIOS acquires an initial memory mapping IO from the CPU, the BIOS performs an initialization operation on the initial memory mapping IO to obtain a target memory mapping IO, and the BIOS uses the target memory mapping IO to interact with the BMC.

In some embodiments, when the computer-readable instructions are executed, the one or more processors further implement steps of: segmenting the initial memory mapping IO by the BIOS to obtain a header region and a data region of the initial memory mapping IO, initializing the header region by the BIOS, switching the IPMI command channel to the target memory mapping IO, and performing a filling operation on the data region by the BIOS, and obtaining the target memory mapping IO.

In some embodiments, when the computer-readable instructions are executed, the one or more processors further implement steps of: the BIOS interacting with the BMC by using the data region of the target memory mapping IO.

In some embodiments, when the computer-readable instructions are executed, the one or more processors further implement steps of: writing the arbitration mechanism into the header region by the BIOS.

In some embodiments, the arbitration mechanism only allows the BIOS or BMC to read the target memory mapping IO at the same time point.

In some embodiments, the arbitration mechanism only allows the BIOS or BMC to modify the target memory mapping IO at the same time point.

In some embodiments, when the computer-readable instructions are executed, the one or more processors further implement steps of: writing an IPMI command channel into the data region by the BIOS, writing an option and an option value corresponding to the BIOS into the data region by the BIOS, and writing information of a PCIE device corresponding to the BMC into the data region by the BIOS, where the PCIE device is built in the BMC.

In some embodiments, when the computer-readable instructions are executed, the one or more processors further implement steps of: calculating, by the BIOS, a data check value according to the IPMI command channel, the option and the option value corresponding to the BIOS and the information of the PCIE device, and writing the data check value into the header region by the BIOS so as to obtain the target memory mapping IO.

In some embodiments, when the computer-readable instructions are executed, the one or more processors further implement steps of: invoking the BMC to acquire current configuration information of the server, invoking the BMC to write the current configuration information into the data region of the target memory mapping IO, invoking the BIOS to pull the current configuration information from the data region of the target memory mapping IO, and invoking the BIOS to perform an initialization operation on the server according to the current configuration information.

In some embodiments, the server further includes a CPLD device, and when the computer-readable instructions are executed, the one or more processors further implement steps of: invoking the CPLD device to acquire server configuration information of the server, invoking the CPLD device to write the server configuration information into the data region of the target memory mapping IO, pulling, by the BIOS, the server configuration information from the data region of the target memory mapping IO, and performing, by the BIOS, an initialization operation on the server according to the server configuration information.

In some embodiments, when the computer-readable instructions are executed, the one or more processors further implement steps of: invoking the BIOS to send an IPMI command to BMC through the target memory mapping IO.

In some embodiments, when the computer-readable instructions are executed, the one or more processors further implement steps of: acquiring, by the BMC, an option and an option value corresponding to the BIOS in the target memory mapping IO, receiving a modification operation instruction by the BMC, acquiring an option and a new option value corresponding to the BIOS according to the modification operation instruction, and writing, by the BMC, the option and the new option value corresponding to the BIOS into the target memory mapping IO.

In some embodiments, when the computer-readable instructions are executed, the one or more processors further implement steps of: invoking the BIOS to send the current data to the BMC, invoking the BMC to verify the validity of the current data according to the target memory mapping IO, where the current data sent by the BIOS is received when the current data is valid data.

In some embodiments not according to the invention, a non-volatile computer readable storage medium is provided.
The computer readable storage medium is stored with computer readable instructions that, when executed by one or more processors, perform the steps of: at a power-on self-test stage after the server is powered on, acquiring, by the BIOS, an initial memory mapping IO from the CPU, performing, by the BIOS, an initialization operation on the initial memory mapping IO to obtain a target memory mapping IO, and using, by the BIOS, the target memory mapping IO to interact with the BMC.

In an embodiment, when the computer-readable instructions are executed, the one or more processors further implement steps of: segmenting the initial memory mapping IO by the BIOS to obtain a header region and a data region of the initial memory mapping IO, initializing the header region by the BIOS, switching the IPMI command channel to the target memory mapping IO, and performing a filling operation on the data region by the BIOS to obtain the target memory mapping IO.

In some embodiments, when the computer-readable instructions are executed, the one or more processors further implement steps of: using, by the BIOS, the data region of the target memory mapping IO to interact with the BMC.

In some embodiments, when the computer-readable instructions are executed, the one or more processors further implement steps of: writing the arbitration mechanism into the header region by the BIOS.

In some embodiments, the arbitration mechanism only allows the BIOS or the BMC to read the target memory mapping IO at the same time point.

In some embodiments, the arbitration mechanism only allows the BIOS or the BMC to modify the target memory mapping IO at the same time point.

In some embodiments, when the computer-readable instructions are executed, the one or more processors further implement steps of: writing an IPMI command channel into the data region by the BIOS, writing an option and an option value corresponding to the BIOS into the data region by the BIOS, and writing information of a PCIE device corresponding to the BMC into the data region by the BIOS, where the PCIE device is built in the BMC.

In some embodiments, when the computer-readable instructions are executed, the one or more processors further implement steps of: calculating, by the BIOS, a data check value according to the IPMI command channel, the option and the option value corresponding to the BIOS and the information of the PCIE device, and writing the data check value into the header region by the BIOS so as to obtain the target memory mapping IO.

In some embodiments, when the computer-readable instructions are executed, the one or more processors further implement steps of: invoking the BMC to acquire current configuration information of the server, invoking the BMC to write the current configuration information into the data region of the target memory mapping IO, invoking the BIOS to pull the current configuration information from the data region of the target memory mapping IO, and invoking the BIOS to perform an initialization operation on the server according to the current configuration information.

In some embodiments, the server further comprises a CPLD device, and when the computer-readable instructions are executed, the one or more processors further implement steps of: invoking the CPLD device to acquire server configuration information of the server, invoking the CPLD device to write the server configuration information into the data region of the target memory mapping IO, pulling, by the BIOS, the server configuration information from the data region of the target memory mapping IO, and performing, by the BIOS, an initialization operation on the server according to the server configuration information.

In some embodiments, when the computer-readable instructions are executed, the one or more processors further implement steps of: invoking the BIOS to send an IPMI command to BMC through the target memory mapping IO.

In some embodiments, when the computer-readable instructions are executed, the one or more processors further implement steps of: acquiring, by the BMC, an option and an option value corresponding to the BIOS in the target memory mapping IO, receiving a modification operation instruction by the BMC, acquiring an option and a new option value corresponding to the BIOS according to the modification operation instruction, and writing, by the BMC, the option and the new option value corresponding to the BIOS into the target memory mapping IO.

In some embodiments, when the computer-readable instructions are executed, the one or more processors further implement steps of: invoking the BIOS to send the current data to the BMC, invoking the BMC to verify the validity of the current data according to the target memory mapping IO, where the current data sent by the BIOS is received when the current data is valid data.

Those skilled in art may understand that all or part of the processes in the above embodiments may be implemented by instructing relevant hardware through computer-readable instructions. The computer-readable instructions may be stored on a non-volatile computer-readable storage medium. When executed, these computer-readable instructions may include processes as described in the various embodiments mentioned above. The memory, storage device, database, or other media mentioned in the various embodiments of the disclosure may include a non-volatile memory and/or a volatile memory. The non-volatile memory may include Read-Only Memory (ROM), Programmable ROM (PROM), Electrically Programmable ROM (EPROM), Electrically Erasable Programmable ROM (EEPROM), or flash memory. The volatile memory may include Random Access Memory (RAM) or external high-speed cache memory. By way of illustration rather than limitation, RAM is available in various forms, such as Static RAM (SRAM), Dynamic RAM (DRAM), Synchronous DRAM (SDRAM), Double Data Rate SDRAM (DDR SDRAM), Enhanced SDRAM (ESDRAM), Synchronous Link (SL) DRAM (SLDRAM), Rambus Direct RAM (RDRAM), Direct Rambus Dynamic RAM (DRDRAM), and Rambus Dynamic Random Access Memory (RDRAM), etc.

The embodiments described above only express several implementations of this application, and the descriptions are specific and detailed. However, the above should not be understood as a limitation to the scope of the application. Therefore, the scope of protection of the application should be determined by the attached claims.

## Claims

1. A firmware interaction method, applied to a server comprising a Central Processing Unit (CPU), a Basic Input Output System (BIOS) and a Baseboard Management Controller (BMC), wherein the method comprises:
acquiring (102), by the BIOS, an initial memory mapping IO from the CPU at a power-on self-test stage after the server is powered on;
obtaining (104) a target memory mapping IO through performing an initialization operation on the initial memory mapping IO by the BIOS; and
using (106), by the BIOS, the target memory mapping IO to interact with the BMC;
wherein the obtaining (104) the target memory mapping IO through performing the initialization operation on the initial memory mapping IO by the BIOS comprises:
segmenting (202) the initial memory mapping IO by the BIOS, and obtaining a header region and a data region of the initial memory mapping IO;
initializing (204) the header region by the BIOS, and switching an Intelligent Platform Management Interface (IPMI) command channel to the target memory mapping IO; and
performing (206) a filling operation on the data region by the BIOS, and obtaining the target memory mapping IO, wherein the performing a filling operation on the data region comprises: writing (302), by the BIOS, the IPMI command channel into the data region; writing (304), by the BIOS, an option and an option value corresponding to the BIOS into the data region; and writing (306), by the BIOS, information about a Peripheral Component Interface Express (PCIE) device corresponding to the BMC into the data region, wherein the PCIE device is built in the BMC;
wherein the method further comprises:
calculating (402), by the BIOS, a data check value according to the IPMI command channel, the option and the option value corresponding to the BIOS and the information about the PCIE device; and
writing (404), by the BIOS, the data check value into the header region, and obtaining the target memory mapping IO.

2. The method according to claim 1, wherein at the power-on self-test stage after the server is powered on, the BIOS plans to lay out a memory mapping IO according to a capacity requirement of a Peripheral Component Interface Express (PCIE) device built in the BMC, so as to obtain the initial memory mapping IO that is blank.

3. The method according to claim 1, wherein the initialization operation comprises:
writing one or more items of following data into the initial memory mapping IO: data written with an arbitration mechanism, data about data integrity detection, a data head flag, a data format, and data about a data storage method in power failure.

4. The method according to claim 1, wherein the header region is configured for identifying a use object of the data region at a current time point, the use object being the BIOS or the BMC; and
the data region is configured for recording data information comprising a flag bit and a data format.

5. The method according to claim 1, wherein the using (106), by the BIOS, the target memory mapping IO to interact with the BMC comprises:
using, by the BIOS, the data region of the target memory mapping IO to interact with the BMC.

6. The method according to claim 1, wherein the initializing (204) the header region by the BIOS comprises:
writing an arbitration mechanism into the header region by the BIOS;
wherein the arbitration mechanism is configured for allowing only the BIOS or the BMC to read the target memory mapping IO at a same time point; or
wherein the arbitration mechanism is configured for allowing only the BIOS or the BMC to modify the target memory mapping IO at a same time point.

7. The method according to claim 1, wherein after the using, by the BIOS, the target memory mapping IO to interact with the BMC, the method further comprises:
invoking the BMC to acquire current configuration information of the server (502);
invoking the BMC to write the current configuration information into the data region of the target memory mapping IO (504);
invoking the BIOS to pull the current configuration information from the data region of the target memory mapping IO (506); and
invoking the BIOS to perform an initialization operation on the server according to the current configuration information (508).

8. The method according to claim 1, wherein the server further comprises a complex programmable logic device (CPLD) device, the BIOS interacts with the CPLD device by using the target memory mapping IO, the method further comprises:
invoking the CPLD device to acquire server configuration information of the server (602);
invoking the CPLD device to write the server configuration information into the data region of the target memory mapping IO (604);
pulling, by the BIOS, the server configuration information from the data region of the target memory mapping IO (606); and
performing, by the BIOS, an initialization operation on the server according to the server configuration information (608).

9. The method according to claim 1, wherein after the using, by the BIOS, the target memory mapping IO to interact with the BMC, the method further comprises:
invoking the BIOS to send an Intelligent Platform Management Interface (IPMI) command to the BMC through the target memory mapping IO.

10. The method according to claim 1, wherein after the using, by the BIOS, the target memory mapping IO to interact with the BMC, the method further comprises:
acquiring, by the BMC, the option and the option value corresponding to the BIOS in the target memory mapping IO (702);
receiving, by the BMC, a modification operation instruction, and acquiring an option and a new option value corresponding to the BIOS according to the modification operation instruction (704); and
writing, by the BMC, the option and the new option value corresponding to the BIOS into the target memory mapping IO (706).

11. The method according to claim 1, wherein after the using, by the BIOS, the target memory mapping IO to interact with the BMC, the method further comprises:
invoking the BIOS to send current data to the BMC (802); and
invoking the BMC to verify validity of the current data according to the target memory mapping IO, and receiving the current data sent by the BIOS in response to the current data being valid data (804).

12. A firmware interaction apparatus, applied to a server comprising a Central Processing Unit (CPU), a Basic Input Output System (BIOS) and a Baseboard Management Controller (BMC), the apparatus comprises:
an acquisition module (902) configured for acquiring an initial memory mapping IO from the CPU by the BIOS at a power-on self-test stage after the server is powered on;
an operation module (904) configured for performing an initialization operation on the initial memory mapping IO by the BIOS and obtaining a target memory mapping IO; and
an interaction module (906) configured for using, by the BIOS, the target memory mapping IO to interact with the BMC;
wherein the operation module (904) is further configured for:
segmenting the initial memory mapping IO by the BIOS, and obtaining a header region and a data region of the initial memory mapping IO;
initializing the header region by the BIOS, and switching an Intelligent Platform Management Interface (IPMI) command channel to the target memory mapping IO; and
performing a filling operation on the data region by the BIOS, and obtaining the target memory mapping IO, wherein the filling operation on the data region comprises: writing, by the BIOS, the IPMI command channel into the data region; writing, by the BIOS, an option and an option value corresponding to the BIOS into the data region; and writing, by the BIOS, information about a Peripheral Component Interface Express (PCIE) device corresponding to the BMC into the data region, wherein the PCIE device is built in the BMC;
wherein the firmware interaction apparatus is configured for:
calculating, by the BIOS, a data check value according to the IPMI command channel, the option and the option value corresponding to the BIOS and the information about the PCIE device; and
writing, by the BIOS, the data check value into the header region, and obtaining the target memory mapping IO.

## Patentansprüche

1. Ein Verfahren zur Firmware-Interaktion, das auf einen Server angewendet wird, der eine Zentraleinheit (CPU), ein Basis-Eingabe-/Ausgabe-System (BIOS) und einen Baseboard Management Controller (BMC) umfasst, wobei das Verfahren Folgendes umfasst:
Erfassen (102) einer initialen Speicherzuordnung IO von der CPU in einer Selbsttestphase beim Einschalten durch das BIOS, nachdem der Server eingeschaltet wurde;
Erhalten (104) einer Zielspeicherzuordnung IO durch Ausführen eines Initialisierungsvorgangs auf der initialen Speicherzuordnung IO durch das BIOS; und
Verwenden (106) der Zielspeicherzuordnung IO zur Interaktion mit dem BMC durch das BIOS;
wobei das Erhalten (104) der Zielspeicherzuordnung IO durch Ausführen des Initialisierungsvorgangs auf der initialen Speicherzuordnung IO durch das BIOS umfasst:
Segmentieren (202) der initialen Speicherzuordnung IO und Erhalten eines Header-Bereichs und eines Datenbereichs der initialen Speicherzuordnung IO durch das BIOS;
Initialisieren (204) des Header-Bereichs und Umschalten eines intelligenten Plattform-Management-Schnittstelle (IPMI)-Befehlskanals auf die Zielspeicherzuordnung IO durch das BIOS; und
Ausführen (206) eines Füllvorgangs für den Datenbereich und Erhalten der Zielspeicherzuordnung IO durch das BIOS, wobei das Ausführen eines Füllvorgangs für den Datenbereich umfasst:
Schreiben (302) des IPMI-Befehlskanals in den Datenbereich durch das BIOS;
Schreiben (304) einer Option und eines Optionswerts, der dem BIOS entspricht, in den Datenbereich durch das BIOS; und
Schreiben (306) von Informationen über ein Peripheral Component Interface Express (PCIE)-Gerät, das dem BMC entspricht, in den Datenbereich durch das BIOS, wobei das PCIE-Gerät in das BMC eingebaut ist;
wobei das Verfahren ferner umfasst:
Berechnen (402) eines Datenprüfwerts gemäß dem IPMI-Befehlskanal, der Option und dem Optionswert, die dem BIOS entsprechen, sowie den Informationen über das PCIE-Gerät durch das BIOS; und
Schreiben (404) des Datenprüfwerts in den Header-Bereich und Erhalten der Zielspeicherzuordnung IO durch das BIOS.

2. Verfahren nach Anspruch 1, wobei das BIOS in der Selbsttestphase nach dem Einschalten des Servers plant, eine Speicherzuordnung IO entsprechend einer Kapazitätsanforderung eines in das BMC integrierten Peripheral Component Interface Express (PCIE)-Geräts zu erstellen, um die initiale Speicherzuordnung IO zu erhalten, die leer ist.

3. Verfahren nach Anspruch 1, wobei der Initialisierungsvorgang umfasst:
Schreiben eines oder mehrerer Elemente der folgenden Daten in die initiale Speicherzuordnung IO:
Daten, die mit einem Arbitrierungsmechanismus geschrieben wurden,
Daten über die Datenintegritätserkennung,
ein Daten-Head-Flag,
ein Datenformat und
Daten über ein Datenspeicherverfahren bei Stromausfall.

4. Verfahren nach Anspruch 1, wobei der Header-Bereich dazu eingerichtet ist, dass er zu einem aktuellen Zeitpunkt ein Verwendungsobjekt des Datenbereichs identifiziert, wobei das Verwendungsobjekt das BIOS oder das BMC ist; und
der Datenbereich dazu eingerichtet ist, dass er Dateninformationen aufzeichnet, die ein Flag-Bit und ein Datenformat umfassen.

5. Verfahren nach Anspruch 1, wobei das Verwenden (106) der Zielspeicherzuordnung IO zur Interaktion mit dem BMC durch das BIOS umfasst:
Verwenden des Datenbereichs der Zielspeicherzuordnung IO zur Interaktion mit dem BMC durch das BIOS.

6. Verfahren nach Anspruch 1, wobei das Initialisieren (204) des Header-Bereichs durch das BIOS umfasst:
Schreiben eines Arbitrierungsmechanismus in den Header-Bereich durch das BIOS;
wobei der Arbitrierungsmechanismus dazu eingerichtet ist, nur dem BIOS oder dem BMC zu erlauben die Zielspeicherzuordnung IO zu einem gleichen Zeitpunkt zu lesen; oder
wobei der Arbitrierungsmechanismus dazu eingerichtet ist, nur dem BIOS oder dem BMC zu erlauben die Zielspeicherzuordnung IO zu einem gleichen Zeitpunkt zu ändern.

7. Das Verfahren gemäß Anspruch 1, wobei nach dem Verwenden der Zielspeicherzuordnung IO zur Interaktion mit dem BMC durch das BIOS das Verfahren ferner umfasst:
Aufrufen des BMC, um aktuelle Konfigurationsinformationen des Servers zu erfassen (502);
Aufrufen des BMC, um die aktuellen Konfigurationsinformationen in den Datenbereich der Zielspeicherzuordnung IO zu schreiben (504);
Aufrufen des BIOS, um die aktuellen Konfigurationsinformationen aus dem Datenbereich der Zielspeicherzuordnung IO abzurufen (506); und
Aufrufen des BIOS, um einen Initialisierungsvorgang auf dem Server gemäß den aktuellen Konfigurationsinformationen durchzuführen (508).

8. Verfahren nach Anspruch 1, wobei der Server ferner eine komplexe programmierbare Logik (CPLD)-Vorrichtung umfasst, wobei das BIOS mit der CPLD-Vorrichtung unter Verwendung der Zielspeicherzuordnung IO interagiert, wobei das Verfahren ferner umfasst:
Aufrufen der CPLD-Vorrichtung, um Serverkonfigurationsinformationen des Servers zu erfassen (602),
Aufrufen der CPLD-Vorrichtung, um die Serverkonfigurationsinformationen in den Datenbereich der Zielspeicherzuordnung IO zu schreiben (604);
Abrufen der Serverkonfigurationsinformationen aus dem Datenbereich der Zielspeicherzuordnung IO durch das BIOS (606); und
Ausführen eines Initialisierungsvorgangs auf dem Server gemäß den Serverkonfigurationsinformationen durch das BIOS (608).

9. Verfahren nach Anspruch 1, wobei nach dem Verwenden der Zielspeicherzuordnung IO zur Interaktion mit dem BMC durch das BIOS das Verfahren ferner umfasst:
Aufrufen des BIOS, um einen intelligenten Plattform-Management-Schnittstelle (IPMI)-Befehl über die Zielspeicherzuordnung IO an das BMC zu senden.

10. Verfahren nach Anspruch 1, wobei nach dem Verwenden der Zielspeicherzuordnung IO zur Interaktion mit dem BMC durch das BIOS das Verfahren ferner umfasst:
Erwerben der Option und des Optionswerts, die dem BIOS in der Zielspeicherzuordnung IO entsprechen, durch das BMC (702);
Empfangen einer Änderungsoperationsanweisung und Erfassen einer Option und eines neuen Optionswerts entsprechend dem BIOS gemäß der Änderungsoperationsanweisung durch das BMC (704); und
Schreiben der Option und des neuen Optionswerts, die dem BIOS entsprechen, in die Zielspeicherzuordnung IO durch das BMC (706).

11. Verfahren nach Anspruch 1, wobei nach dem Verwenden der Zielspeicherzuordnung IO zur Interaktion mit dem BMC durch das BIOS das Verfahren ferner umfasst:
Aufruf des BIOS, um aktuelle Daten an das BMC zu senden (802); und
Aufruf des BMC zur Überprüfung der Gültigkeit der aktuellen Daten gemäß der Zielspeicherzuordnung IO und Empfang der aktuellen Daten, die vom BIOS als Antwort auf die Gültigkeit der aktuellen Daten gesendet wurden (804).

12. Eine Firmware-Interaktionsvorrichtung, die auf einen Server angewendet wird, der eine Zentraleinheit (CPU), ein Basis-Eingabe-/Ausgabesystem (BIOS) und einen Baseboard Management Controller (BMC) umfasst, wobei die Vorrichtung Folgendes umfasst:
ein Erfassungsmodul (902), das dazu eingerichtet ist, dass es in einer Selbsttestphase nach dem Einschalten des Servers eine initiale Speicherzuordnung IO von der CPU durch das BIOS erfasst;
ein Vorgangsmodul (904), das dazu eingerichtet ist, dass es ein Initialisierungsvorgang für die initiale Speicherzuordnung IO durch das BIOS ausführt und eine Zielspeicherzuordnung IO erhält; und
ein Interaktionsmodul (906), das dazu eingerichtet ist, dass das BIOS die Zielspeicherzuordnung IO verwendet, um mit dem BMC zu interagieren;
wobei das Vorgangsmodul (904) ferner eingerichtet ist zum:
Segmentieren der initialen Speicherzuordnung IO durch das BIOS und Erhalten eines Header-Bereichs und eines Datenbereichs der initialen Speicherzuordnung IO, Initialisieren des Header-Bereichs durch das BIOS und Umschaltung eines intelligenten Plattform-Management-Schnittstelle (IPMI)-Befehlskanals auf die Zielspeicherzuordnung IO; und
Ausführen eines Füllvorgangs für den Datenbereich durch das BIOS und Erhalten der Zielspeicherzuordnung IO, wobei der Füllvorgang für den Datenbereich umfasst:
Schreiben des IPMI-Befehlskanals in den Datenbereich durch das BIOS;
Schreiben einer Option und eines Optionswerts, der dem BIOS entspricht, in den Datenbereich durch das BIOS; und
Schreiben von Informationen über ein dem BMC zugehörigen Peripheral Component Interface Express (PCIE)-Gerät in den Datenbereich durch das BIOS, wobei das PCIE-Gerät in das BMC eingebaut ist;
wobei die Firmware-Interaktionsvorrichtung eingerichtet ist zum:
Berechnen eines Datenprüfwerts gemäß dem IPMI-Befehlskanal, der Option und dem Optionswert, die dem BIOS entsprechen, sowie den Informationen über das PCIE-Gerät durch das BIOS; und
Schreiben des Datenprüfwerts in den Header-Bereich und Erhalten der Zielspeicherzuordnung IO durch das BIOS.

## Revendications

1. Procédé d'interaction entre micrologiciels, appliqué à un serveur comprenant une unité centrale de traitement (CPU), un système d'entrée-sortie de base (BIOS) et un contrôleur de gestion de carte de base (BMC), dans lequel le procédé comprend :
l'acquisition (102), par le BIOS, d'un mappage de mémoire initial E/S à partir de la CPU à un stade d'autotest à la mise sous tension après la mise sous tension du serveur ;
l'obtention (104) d'une E/S de mappage de mémoire cible par l'exécution d'une opération d'initialisation sur l'E/S de mappage de mémoire initial par le BIOS ; et
l'utilisation (106), par le BIOS, de l'E/S de mappage de mémoire cible pour interagir avec le BMC ;
dans lequel l'obtention (104) de l'E/S de mappage de mémoire cible par l'exécution de l'opération d'initialisation sur l'E/S de mappage de mémoire initial par le BIOS comprend :
la segmentation (202) de l'E/S de mappage de mémoire initial par le BIOS, et l'obtention d'une région d'en-tête et d'une région de données de l'E/S de mappage de mémoire initial ;
l'initialisation (204) de la région d'en-tête par le BIOS, et la commutation d'un canal de commande d'interface de gestion de plateforme intelligente (IPMI) vers l'E/S de mappage de mémoire cible ; et
l'exécution (206) d'une opération de remplissage sur la région de données par le BIOS, et l'obtention de l'E/S de mappage de mémoire cible, dans lequel l'exécution d'une opération de remplissage sur la région de données comprend :
l'écriture (302), par le BIOS, du canal de commande IPMI dans la région de données ; l'écriture (304), par le BIOS, d'une option et d'une valeur d'option correspondant au BIOS dans la région de données ; et l'écriture (306), par le BIOS, d'informations sur un dispositif d'interface de composant périphérique express (PCIE) correspondant au BMC dans la région de données, dans lequel le dispositif PCIE est intégré dans le BMC ;
dans lequel le procédé comprend en outre :
le calcul (402), par le BIOS, d'une valeur de vérification de données en fonction du canal de commande IPMI, de l'option et de la valeur d'option correspondant au BIOS et des informations concernant le dispositif PCIE ; et
l'écriture (404), par le BIOS, de la valeur de vérification de données dans la région d'en-tête, et l'obtention du mappage de mémoire cible E/S.

2. Procédé selon la revendication 1, dans lequel, au stade d'autotest à la mise sous tension après la mise sous tension du serveur, le BIOS prévoit de disposer une E/S de mappage de mémoire en fonction d'une exigence de capacité d'un dispositif d'interface de composant périphérique express (PCIE) intégré au BMC, afin d'obtenir l'E/S de mappage de mémoire initial qui est vide.

3. Procédé selon la revendication 1, dans lequel l'opération d'initialisation comprend :
l'écriture d'un ou de plusieurs éléments de données suivantes dans l'E/S de mappage de mémoire initial : des données écrites avec un mécanisme d'arbitrage, des données relatives à la détection de l'intégrité des données, un indicateur de tête de données, un format de données et des données relatives à une méthode de stockage des données en cas de coupure de courant.

4. Procédé selon la revendication 1, dans lequel la région d'en-tête est configurée pour identifier un objet d'utilisation de la région de données à un moment donné, l'objet d'utilisation étant le BIOS ou le BMC ; et
la région de données est configurée pour enregistrer des informations de données comprenant un bit d'indicateur et un format de données.

5. Procédé selon la revendication 1, dans lequel l'utilisation (106) par le BIOS de l'E/S de mappage de mémoire cible pour interagir avec le BMC comprend :
l'utilisation, par le BIOS, de la région de données de l'E/S de mappage de mémoire cible pour interagir avec le BMC.

6. Procédé selon la revendication 1, dans lequel l'initialisation (204) de la région d'en-tête par le BIOS comprend :
l'écriture d'un mécanisme d'arbitrage dans la région d'en-tête par le BIOS ;
dans lequel le mécanisme d'arbitrage est configuré pour permettre uniquement au BIOS ou au BMC de lire l'E/S de mappage de mémoire cible à un même moment ; ou
dans lequel le mécanisme d'arbitrage est configuré pour permettre uniquement au BIOS ou au BMC de modifier l'E/S de mappage de mémoire cible à un même moment.

7. Procédé selon la revendication 1, dans lequel, après l'utilisation, par le BIOS, de l'E/S de mappage de mémoire cible pour interagir avec le BMC, le procédé comprend en outre :
l'appel du BMC pour acquérir des informations de configuration actuelles du serveur (502) ;
l'appel du BMC pour écrire les informations de configuration actuelles dans la région de données de l'E/S de mappage de mémoire cible (504) ;
l'appel du BIOS pour extraire les informations de configuration actuelles de la région de données de l'E/S de mappage de mémoire cible (506) ; et
l'appel du BIOS pour effectuer une opération d'initialisation sur le serveur conformément aux informations de configuration actuelles (508).

8. Procédé selon la revendication 1, dans lequel le serveur comprend en outre un dispositif de dispositif logique programmable complexe (CPLD), le BIOS interagit avec le dispositif CPLD en utilisant l'E/S de mappage de mémoire cible, le procédé comprend en outre :
l'appel du dispositif CPLD pour acquérir des informations de configuration de serveur (602) ;
l'appel du dispositif CPLD pour écrire les informations de configuration de serveur dans la région de données de l'E/S de mappage de mémoire cible (604) ;
l'extraction, par le BIOS, des informations de configuration de serveur de la région de données de l'E/S de mappage de mémoire cible (606) ; et
l'exécution, par le BIOS, d'une opération d'initialisation sur le serveur conformément aux informations de configuration de serveur (608).

9. Procédé selon la revendication 1, dans lequel, après l'utilisation, par le BIOS, de l'E/S de mappage de mémoire cible pour interagir avec le BMC, le procédé comprend en outre :
l'appel du BIOS pour envoyer une commande d'interface de gestion de plateforme intelligente (IPMI) au BMC via l'E/S de mappage de mémoire cible.

10. Procédé selon la revendication 1, dans lequel, après l'utilisation, par le BIOS, de l'E/S de mappage de mémoire cible pour interagir avec le BMC, le procédé comprend en outre :
l'acquisition, par le BMC, de l'option et de la valeur d'option correspondant au BIOS dans l'E/S de mappage de mémoire cible (702) ;
la réception, par le BMC, d'une instruction d'opération de modification, et l'acquisition d'une option et d'une nouvelle valeur d'option correspondant au BIOS conformément à l'instruction d'opération de modification (704) ; et
l'écriture, par le BMC, de l'option et de la nouvelle valeur d'option correspondant au BIOS dans l'E/S de mappage de mémoire cible (706).

11. Procédé selon la revendication 1, dans lequel, après l'utilisation, par le BIOS, de l'E/S de mappage de mémoire cible pour interagir avec le BMC, le procédé comprend en outre :
l'appel du BIOS pour envoyer des données actuelles au BMC (802) ; et
l'appel du BMC pour vérifier la validité des données actuelles conformément à l'E/S de mappage de mémoire cible, et la réception des données actuelles envoyées par le BIOS en réponse aux données actuelles étant des données valides (804).

12. Appareil d'interaction entre micrologiciels, appliqué à un serveur comprenant une unité centrale de traitement (CPU), un système d'entrée-sortie de base (BIOS) et un contrôleur de gestion de carte de base (BMC), l'appareil comprenant :
un module d'acquisition (902) configuré pour acquérir une E/S de mappage de mémoire initial à partir de la CPU par le BIOS à un stade d'autotest à la mise sous tension après la mise sous tension du serveur ;
un module d'opération (904) configuré pour effectuer une opération d'initialisation sur l'E/S de mappage de mémoire initial par le BIOS et obtenir une E/S de mappage de mémoire cible ; et
un module d'interaction (906) configuré pour utiliser, par le BIOS, l'E/S de mappage de mémoire cible afin d'interagir avec le BMC ;
dans lequel le module d'opération (904) est en outre configuré pour :
segmenter l'E/S de mappage de mémoire initial par le BIOS, et obtenir une région d'en-tête et une région de données de l'E/S de mappage de mémoire initial ;
initialiser la région d'en-tête par le BIOS, et commuter un canal de commande d'interface de gestion de plateforme intelligente (IPMI) vers l'E/S de mappage de mémoire cible ; et
effectuer une opération de remplissage sur la région de données par le BIOS, et obtenir l'E/S de mappage de mémoire cible, dans lequel l'opération de remplissage sur la région de données comprend : l'écriture, par le BIOS, du canal de commande IPMI dans la région de données ; l'écriture, par le BIOS, d'une option et d'une valeur d'option correspondant au BIOS dans la région de données ; et l'écriture, par le BIOS, d'informations sur un dispositif d'interface de composant périphérique express (PCIE) correspondant au BMC dans la région de données, dans lequel le dispositif PCIE est intégré au BMC ;
dans lequel l'appareil d'interaction entre micrologiciels est configuré pour :
calculer, par le BIOS, une valeur de vérification de données en fonction du canal de commande IPMI, de l'option et de la valeur d'option correspondant au BIOS et des informations concernant le dispositif PCIE ; et
écrire, par le BIOS, la valeur de vérification de données dans la région d'en-tête, et obtenir l'E/S de mappage de mémoire cible.
